# EUROPÄISCHE PATENTSCHRIFT

(11) **EP 1 871 557 B1**
(45) Veröffentlichungstag und Bekanntmachung des Hinweises auf die Patenterteilung: **13.04.2016**
(21) Anmeldenummer: 06722506.0
(22) Anmeldetag: 18.02.2006
(51) Int. Cl.: B23B 31/12

(54) **BOHRFUTTER**
DRILL CHUCK
MANDRIN DE PERÇAGE

(30) Priorität: 07.10.2005 EP 05021864; 20.04.2005 DE 102005018392
(43) Veröffentlichungstag der Anmeldung: 02.01.2008
(73) Patentinhaber: Röhm GmbH, 89567 Sontheim (DE)
(72) Erfinder: MACK, Hans-Dieter, 89567 Sontheim (DE)
(74) Vertreter: Hentrich Patentanwälte PartG mbB
(86) Internationale Anmeldenummer: PCT/DE2006/000297
(87) Internationale Veröffentlichungsnummer: WO 2006/111114

(56) Entgegenhaltungen:
- EP-A- 0 017 748
- EP-A- 0 335 593
- EP-A- 0 710 518
- EP-A- 1 504 836

## Beschreibung

Die Erfindung betrifft ein nachspannendes Bohrfutter mit einem Futterkörper, einem koaxial zum Futterkörper verdrehbaren Spannkonus, axial abgestützt auf einem am Futterkörper gelagerten Backenhalter, in dem in Führungsschlitzen Spannbacken geführt sind, die zum Spannen und Lösen durch eine Relativdrehung zwischen dem Futterkörper und dem Spannkonus mit dem Backenhalter verstellbar sind, und mit einer, einen zur Futterachse koaxialen Zahnkranz einerseits und einer unter der Kraft einer Feder in den Zahnkranz eingreifenden, am Backenhalter gelagerten Sperrklinke andererseits aufweisenden Verriegelungseinrichtung, die den Futterkörper und die Sperrklinke bei in den Zahnkranz eingerückter Sperrklinke gegen Relativdrehungen im Sinne eines Lösens der Spannbacken sperrt, Relativdrehungen im Sinne eines Spannens aber unbehindert läßt, wobei die Sperrklinke als zweiarmiger Hebel mit einem mindestens einem einen Sperrzahn aufweisenden ersten Hebelarm und mit einem zur Anlage an eine Steuerkurve bestimmten zweiten Hebelarm gebildet ist.

Aus der EP 0 017 748 A1 ist ein derartiges Bohrfutter bekannt, das sich in der Praxis insbesondere auch für den professionellen Einsatz bewährt hat. Allerdings ist bezüglich dieses Bohrfutters festzustellen, dass bei dessen Bedienung mit der genau aufeinander abgestimmten Verstellung des Löseringes und der Spannhülse Probleme auftauchen können, die den effektiven Einsatz der Verriegelungseinrichtung in Frage stellen. Zum Öffnen des Bohrfutters muss nämlich der Lösering in die Stellung verdreht werden, in der die Sperrklinke aus dem Zahnkranz ausrückt, worauf hin dann in der anderen Drehrichtung die Spannhülse zum Öffnen der Spannbacken verdreht werden kann. Zum Schließen des Bohrfutters muss die Spannhülse in die entgegengesetzte Richtung verdreht werden, wobei anschließend wiederum in der gegenüber der Spannhülse entgegengesetzten Richtung der Lösering verstellt wird, der der Sicherung der einmal erreichten Spannkraft dient. Der Erfindung liegt daher die Aufgabe zugrunde, ein nachspannendes Bohrfutter der eingangs genannten Art so auszubilden, dass dessen Handhabung vereinfacht ist.

Diese Aufgabe wird durch ein Bohrfutter gemäß dem Anspruch 1 gelöst.

Ein derartiges Bohrfutter zeichnet sich durch den großen Vorteil aus, dass auf eine separate Ausbildung von dem Lösering und der Spannhülse verzichtet werden kann, dass also nicht separat der Lösering von der Spannhülse verstellt werden muss. Dies wird erreicht, durch die geeignete begrenzte Verdrehung des Backenhalters gegenüber dem Spannkonus, die ausgenutzt wird, um den Spannzustand der Sperrklinke zu schalten. Im Ergebnis zeigt sich, dass von dem Nutzer allein der Spannkonus ergriffen und verdreht werden muss in der dem Spannen bzw. dem Lösen entsprechenden Richtung, wodurch ohne weiteren Benutzereingriff selbsttätig die Sperrklinke den gewünschten Betriebszustand einnimmt. Um dabei beim Spannen des Bohrfutters ein permanentes Ratschen der Sperrklinke über den Zahnkranz zu vermeiden, ist weiterhin die Rasteinrichtung realisiert, die die Relativdrehung des Spannkonus gegenüber dem Backenhalter erst dann freigibt, wenn eine vorbestimmte Spannkraft erreicht wird, nämlich in der Regel, wenn die Spannbacken an dem Schaft des zu spannnenden Werkzeuges zur Anlage kommen und damit der Drehwiderstand stark ansteigt, der bei einer fortgesetzten Verdrehung des Spannkonus den Wechsel zwischen den beiden Rastsitzen erzwingt.

Die Bildung der Sperrklinke als zweiarmiger Hebel, wovon ein erster Hebelarm den Eingriff in den Zahnkranz dient und der zweite Hebelarm zur Anlage an die am Spannkonus ausgebildete Steuerkurve bestimmt ist, dient der verlässlichen Verstellung der Sperrklinke und dem Erreichen einer hohen Betriebssicherheit.

Es bietet sich an, dass die Feder den ersten, den Sperrzahn aufweisenden Hebelarm beaufschlagt, um so wiederum die Länge des Hebelarms auszunutzen und die Kraftwirkung der Feder in Richtung des Zahnkranzes zu optimieren.

Dabei ist erfindungsgemäß die Steuerkurve derart ausgebildet, die Verstellung der Sperrklinke aus der in den Zahnkranz eingerückten Stellung in die ausgerückte Stellung bei Verdrehung des Spannkonus in die Drehrichtung, die dem Lösen der Spannbacken entspricht zu bewirken.

Ganz besonders bevorzugt ist es weiterhin, wenn die Feder mittels einer Federkurve in der ausgerückten Stellung der Sperrklinke aus der diese beaufschlagenden Stellung weggeschwenkt ist, da so erreicht wird, dass es zu keinem ratschenden oder klappernden Geräusch kommt, wie dies der Fall wäre, wenn beispielsweise eine komprimierte Druckfeder permanent eine Kraftwirkung in Richtung des Zahnkranzes erzeugte.

Weiterhin besteht auch die Möglichkeit, dass der Spannkonus zweiteilig gestaltet und einen der Verstellung der Sperrklinke dienenden Lösering umfasst, wobei der Lösering und ein verminderter Spannkonus in Umfangsrichtung formschlüssig in drehmomentübertragender Weise verbunden sind.

Durch die Zweiteiligkeit des Spannkonus ist die Möglichkeit geschaffen, die Materialwahl für die Bestandteile unabhängig zu treffen, so daß der Lösering aus einem Metall oder alternativ aus einem spritzgußfähigen Material, vorzugsweise Kunststoff, besteht bzw. bestehen kann.

Diese Wahlmöglichkeit besteht auch für den verminderten Spannkonus, der also aus einem Metall oder aus einem spritzgußfähigen Material, vorzugsweise Kunststoff besteht.

Die hinsichtlich der Materialwahl vorteilhafte Zweiteiligkeit muß aber die Funktionsfähigkeit erhalten, so daß der verminderte Spannkonus und der Lösering in Umfangsrichtung formschlüssig in drehmomentübertragender Weise verbunden sind, indem zwischen dem Lösering und der verminderte Spannkonus eine in Umfangsrichtung wirkende Schlitz-Feder-Verbindung ausgebildet ist.

Insbesondere um eine Verkürzung der Baulänge des Bohrfutters zu erreichen, besteht ist Möglichkeit, dass am axial rückwärtigen, den Spannbacken abgewandten Ende des Futterkörpers drehfest ein Haltering angeordnet ist mit einem axial nach vorne weisenden Ringbund, an dem der Zahnkranz ausgebildet ist, also dem Haltering eine duale Funktion zugewiesen wird und dessen drehfeste Zuordnung zum Futterkörper genutzt wird, um den Zahnkranz räumlich entzerrt von anderen Bauteilen zu platzieren.

Dabei bietet es sich dann an, dass der Zahnkranz an der Innenumfangsfläche des Ringbunds ausgebildet ist, und dass am axial rückwärtigen Ende des Spannkonus ein Konusbund ausgebildet ist, der innerhalb des Ringbunds liegt und eine Öffnung zum Durchgriff der Sperrklinke aufweist. Es wird also die Eingriffsrichtung der Sperrklinke angepasst, um eine ausreichende Kontaktlänge zwischen dem Haltering und dem Futterkörper zu erzielen.

Vorteilhaft ist es dabei, wenn der Konusbund die Rastsitze der Rasteinrichtung aufweist, also in einer Ebene sowohl die Rasteinrichtung und die Sperreinrichtung wirkt.

Die Rasteinrichtung läßt sich in besonders einfacher und daher bevorzugter Weise realisieren, wenn zum Eingriff in die Rastsitze der Rasteinrichtung eine auf dem Backenhalter angeordnete Rastfeder zugeordnet ist.

Ein höherer Grad an Verlässlichkeit der Rasteinrichtung wird erreicht, wenn die Rastfeder zweifach vorgesehen ist, so dass dies besonders dann realisiert wird, wenn bei leistungsstarken Bohrmaschinen hohe Belastungen und Vibrationen auftreten können.

Im folgenden wird die Erfindung an in der Zeichnung dargestellten Ausführungsbeispielen näher erläutert; es zeigen:
- Fig. 1: ein erfindungsgemäßes nachspannendes Bohrfutter, links in einem Axialschnitt gezeigt, rechts in einer Seitenansicht,
- Fig. 2A: den Schnitt II in der dem eingerückten Zustand der Sperrklinke entsprechenden ersten Drehlage,
- Fig. 2B: eine der Fig. 2A entsprechende Darstellung in der zweiten Drehlage,
- Fig. 3A: den Schnitt III aus Fig. 1 in der ersten Drehlage,
- Fig. 3B: eine der Fig. 3A entsprechenden Darstellung in der zweiten Drehlage,
- Fig. 4: eine der Fig. 1 entsprechende Darstellung einer Ausführungsform mit einem zweiteiligen Spannkonus mit einem gegenüber der Fig. 1 axial verlängerten Lösering,
- Fig. 5: eine der Fig. 1 entsprechende Darstellung einer weiteren alternativen Ausführungsform mit dem durch eine axial nach hinten zum axial rückwärtigen Ende des Futterkörpers verlängerten Spannkonus zum Ersatz einer Griffhülse,
- Fig. 6: den Schnitt VI - VI aus Fig. 5
- Fig. 7: den Schnitt VII - VII aus Fig. 5,
- Fig. 8A: eine der Fig. 2A entsprechende Darstellung einer alternativen Ausführungsform mit der am Spannkonus gelagerten Feder,
- Fig. 8B: eine der Fig. 2B entsprechende Darstellung der Ausführungsform aus Fig. 8A,
- Fig. 9A: eine der Fig. 2A entsprechende Darstellung einer weiteren nicht zur Erfindung gehörenden Ausführungsform mit einstückig ausgebildeter Sperrklinke und Feder,
- Fig. 9B: eine der Fig. 2B entsprechende Darstellung der nicht zur Erfindung gehörenden Ausführungsform aus Fig. 9A,

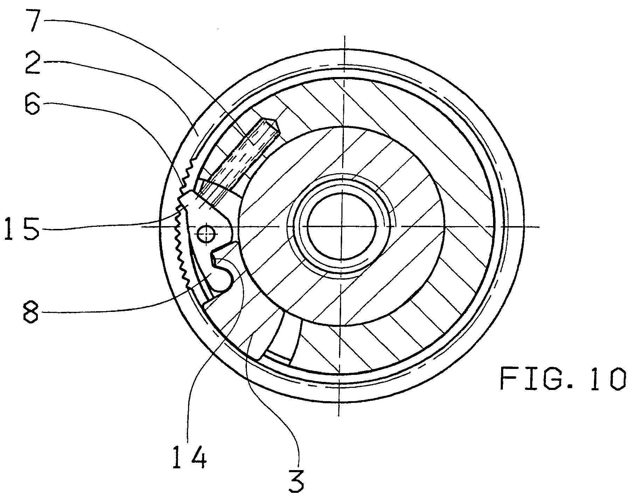

- Fig. 10: eine nicht zur Erfindung gehörende, der Fig. 2A entsprechende Darstellung einer Ausführungsform mit am Spannkonus ausgebildeten Zahnkranz,
- Fig. 11: eine der Fig. 1 entsprechende Darstellung einer Ausführungsform mit einem zweiteiligen Backenhalter,
- Fig. 12: eine der Fig. 1 entsprechende Darstellung einer nicht zur Erfindung gehörenden Ausführungsform mit einer alternativen Anordnung des Zahnkranzes,
- Fig. 13a: den Schnitt VIII-VIII aus der nicht zur Erfindung gehörenden Figur 12 mit der Sperrklinke in der Sperrstellung,
- Fig. 13b: den Schnitt VIII-VIII aus der nicht zur Erfindung gehörenden Figur 12 mit der Sperrklinke in der Lösestellung,
- Fig. 14: eine der Figur 12 entsprechende Darstellung einer nicht zur Erfindung gehörenden Ausführungsform mit einer metallischen Spannhülse des Spannkonus,
- Fig. 15a: den Schnitt XV-XV aus der nicht zur Erfindung gehörenden Figur 14 mit der Sperrklinke in der Sperrstellung,
- Fig. 15b: den Schnitt XV-XV aus der nicht zur Erfindung gehörenden Figur 14 mit der Sperrklinke in der Lösestellung,
- Fig. 15c: den Schnitt XV-XV aus der nicht zur Erfindung gehörenden Figur 14 in einer alternativen Ausführungsform mit zwei Rastfedern, gezeigt in der Sperrstellung, und
- Fig. 15d: den Schnitt XV-XV aus der nicht zur Erfindung gehörenden Figur 14 in der Ausführungsform mit zwei Rastfedern, gezeigt in der Lösestellung.

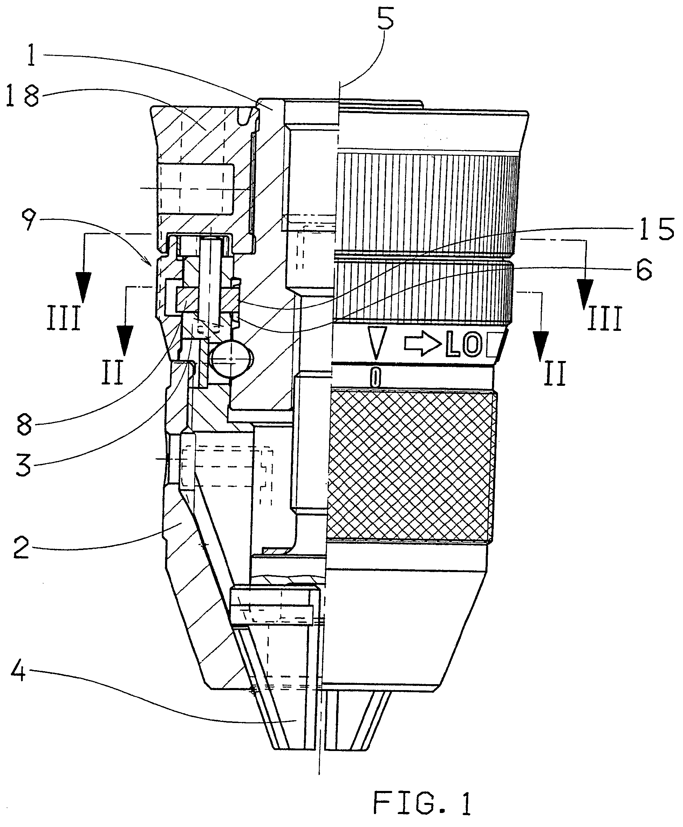

In der Zeichnung ist in Fig. 1 ein nachspannendens Bohrfutter gezeigt, das einen Futterkörper 1 aufweist, sowie einen koaxial zum Futterkörper 1 verdrehbaren Spannkonus 2, axial abgestützt auf einen am Futterkörper 1 gelagerten Backenhalter 3. In dem Backenhalter 3 sind in Führungsschlitzen Spannbacken 4 geführt, die zum Spannen und Lösen durch eine Relativdrehung zwischen dem Futterkörper 1 und dem Spannkonus 2 mit dem Backenhalter 3 verstellbar sind. Das Bohrfutter umfasst weiterhin eine einen zur Futterachse 5 koaxialen Zahnkranz 6 einerseits und einer unter der Kraft einer Feder 7 in den Zahnkranz 6 eingreifenden, am Backenhalter 3 gelagerten Sperrklinke 8 anderseits aufweisenden Verriegelungseinrichtung 9, die den Futterkörper 1 und die Sperrklinke 8 bei in den Zahnkranz 6 eingerückter Sperrklinke 8 gegen Relativdrehungen im Sinne eines Lösens der Spannbacken 4 sperrt; Relativdrehungen im Sinne eines Spannens läßt die Verriegelungseinreichung 9 aber unbehindert. Die Fig. 1 zeigt eine Ausführungsform, bei der der Zahnkranz 6 am Futterkörper 1 ausgebildet ist.

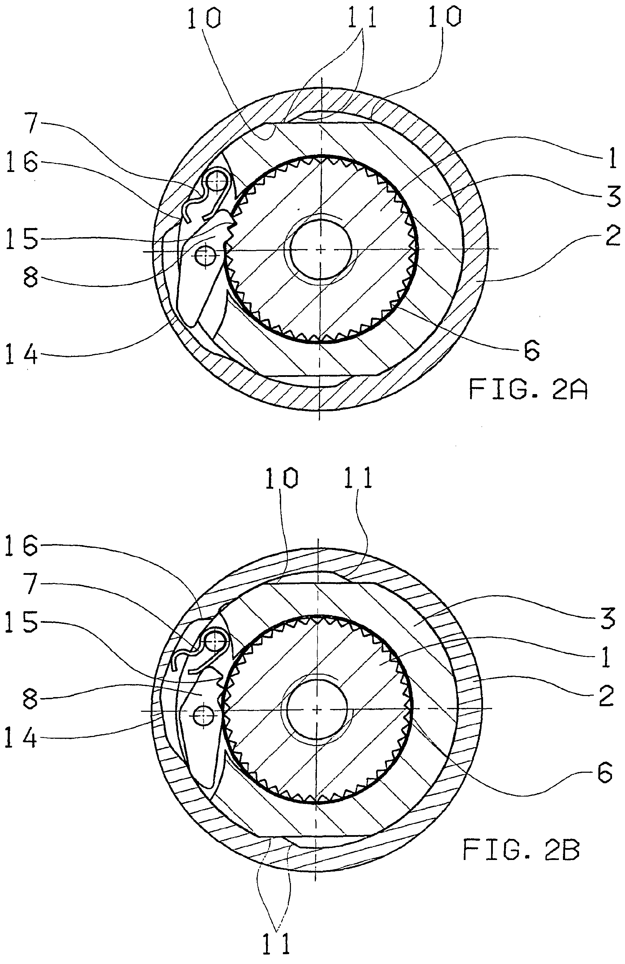

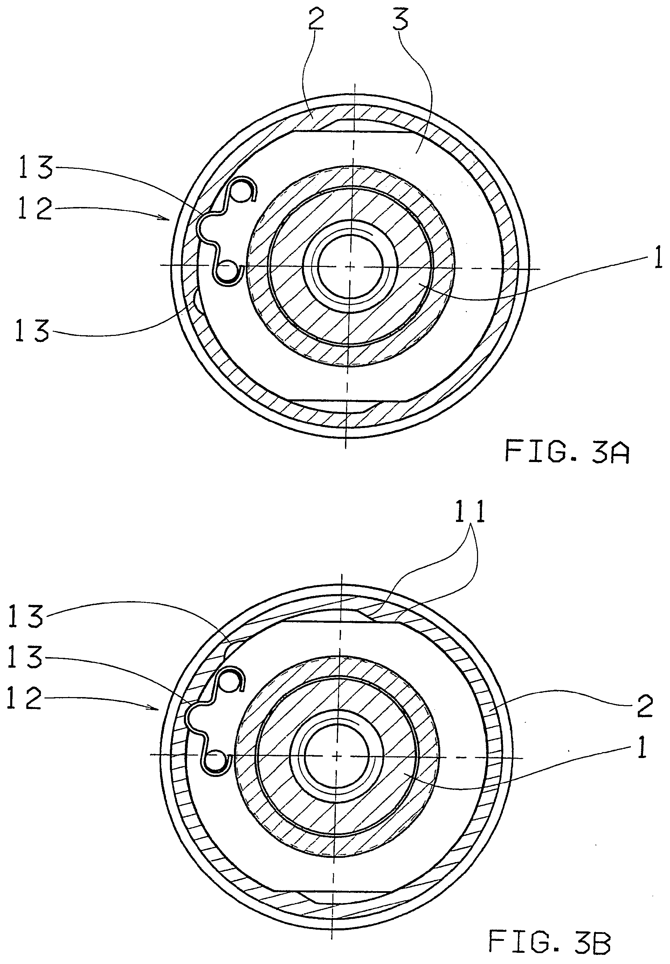

Die Fig. 2A und 2B lassen erkennen, dass an dem Backenhalter 3 ein Anschlag 10 und am Spannkonus 2 ein Gegenanschlag 11 zur definierten Begrenzung einer relativen Verdrehbarkeit des Spannkonus 2 gegenüber dem Backenhalter 3 zwischen einer ersten, dem eingerückten Zustand der Sperrklinke 8 (Fig. 2A) und einer zweiten, dem ausgerückten Zustand entsprechenden Drehlage (Fig. 2B) ausgebildet ist. Weiterhin umfasst das Bohrfutter auch eine Rastenrichtung 12, die aus den Fig. 3A und 3B ersichtlich ist. Diese Rasteinrichtung 12 umfasst einen der ersten Drehlage zugeordneten und einen der zweiten Drehlage zugeordneten Rastsitz 13 zwischen dem Backenhalter 3 und dem Spannkonus 2, wobei die Rasteinrichtung 12 zumindest in der dem Spannen entsprechenden Drehrichtung des Spannkonus 2 dessen Verdrehung gegenüber dem Backenhalter 3 erst bei Erreichen einer vorbestimmten Spannkraft freigibt. In der Praxis geschieht dies, indem beim Spannen des Bohrfutters die Spannbacken 4 zur Anlage an dem Werkzeugschaft geführt werden und dadurch die weitere Verstellung der Spannbacken 4 einen größeren Widerstand erfährt, der das Aufbringen eines erhöhten Drehmomentes bei dem Verdrehen des Spannkonus 2 erfordert, so dass in dieser Betriebssituation die Rasteinrichtung 12 bei dem Wechsel zwischen der zweiten Drehlage und der ersten Drehlage den eingerückten Zustand der Sperrklinke 8 in den Zahnkranz 6 sichert.

Um für einen Werkzeugwechsel ein Öffnen des Bohrfutters zu ermöglichen, muss die Sperrklinke 8 erneut aus dem Zahnkranz 6 ausgerückt werden, wozu dem Spannkonus 2 eine Steuerkurve 14 zugeordnet ist zur Verstellung der Sperrklinke 8, wenn der Spannkonus 2 in die Drehrichtung verdreht wird, die dem Lösen der Spannbacken 4 entspricht. Die Steuerkurve 14 ist dann wirksam, wenn wieder der Wechsel der ersten Drehlage und der zweiten Drehlage erfolgt, also auch die Rasteinrichtung 12 den Rastsitz 13 wechselt.

Die Fig. 2A und 2B lassen erkennen, dass die Sperrklinke 8 als zweiarmiger Hebel mit einem, in der gezeigten Ausführungsform, zwei Sperrzähne 15 aufweisenden ersten Hebelarm und mit einem zur Anlage an die Steuerkurve 14 bestimmten zweiten Hebelarm gebildet ist, wobei die Feder 7, den ersten Hebelarm beaufschlagt. Den Fig. 2A und 2B weiterhin zu entnehmen ist, dass die Feder 7 mittels einer Federkurve 16 in der ausgerückten Stellung der Sperrklinke 8 aus der die Sperrklinke 8 beaufschlagenden Stellung weggeschwenkt ist, wobei dies durch eine Freischneidung in dem Spannkonus 2 in einer in Umfangsrichtung vorliegenden Verlängerung der Steuerkurve 14 erfolgt und das Wegschwenken der Feder 7 sichergestellt ist, da diese dazu tendiert, eine ungespannte Konfiguration einzunehemen.

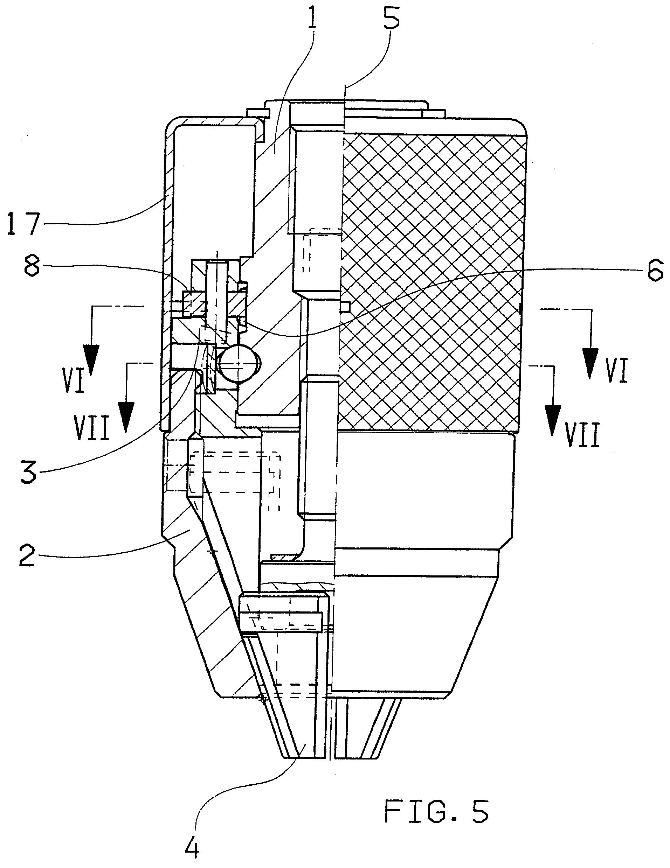

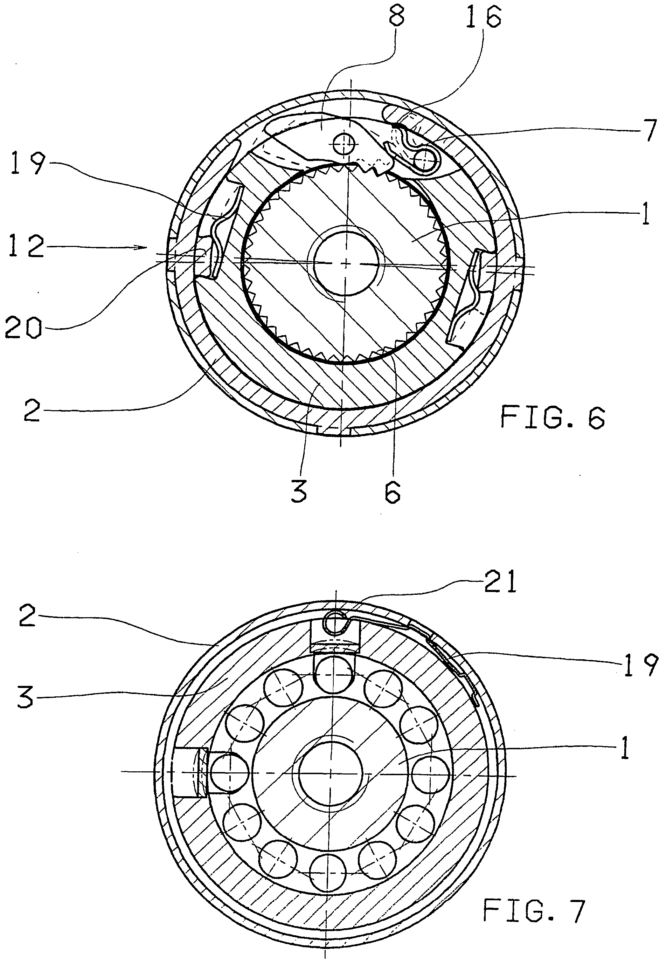

Die Fig. 5 zeigt eine alternative Ausführungsform, bei der dem Spannkonus 2 eine zum rückwärtigen Ende des Futterkörpers geführte Kappe 17 zugeordnet ist, die der Kapselung der Verriegelungseinrichtung 9 und der Rasteinrichtung 12 dient, wenn am axial rückwärtigen Ende des Futterkörpers 1 keine Griffhülse 18 angeordnet ist. Bei dieser Ausführungsform ist ausweislich der Fig. 6 eine alternative Gestaltung der Rasteinrichtung 12 realisiert, bei der im Backenhalter 3 eine im wesentlichen omega-förmige Blattfeder 19 angeordnet ist, die mit einem Rastnoppen 20 zusammen wirkt. Fig. 7 zeigt eine weitere Alternative der Rasteinrichtung 12, bei der eine zwischen dem Spannkonus 2 und dem Backenhalter 3 angeordnete Blattfeder 19 genutzt wird, die mit einer Öse 21 in einer radialen Bohrung des Backenhalters 3 festgelegt ist. Diese Rasteinrichtung 12 läßt sich auch mit in anderen Ausführungsformen gezeigten Rasteinrichtungen 12 kombinieren, so dass dadurch eine Erhöhung des Schaltmomentes möglich ist.

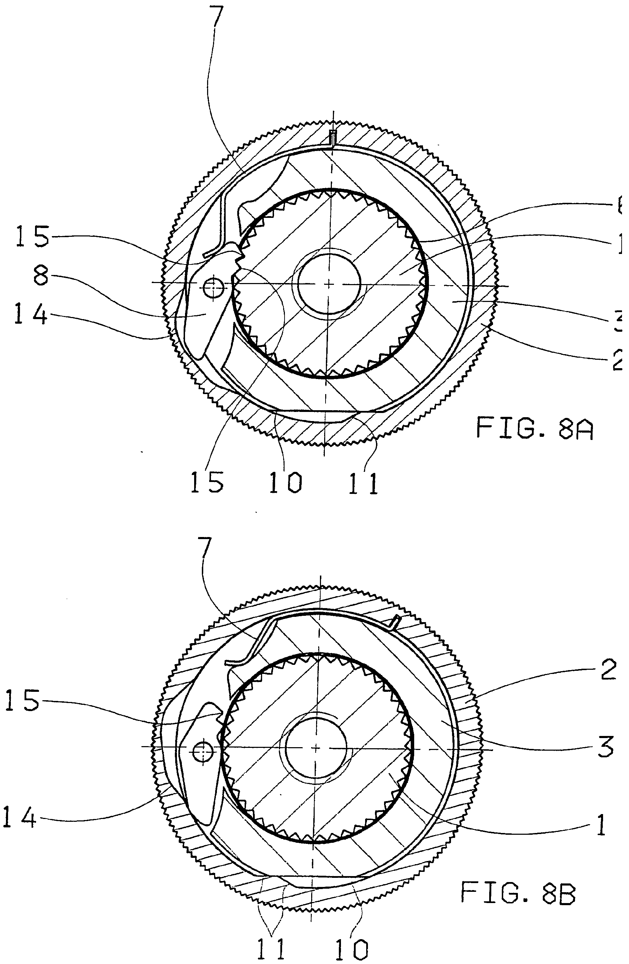

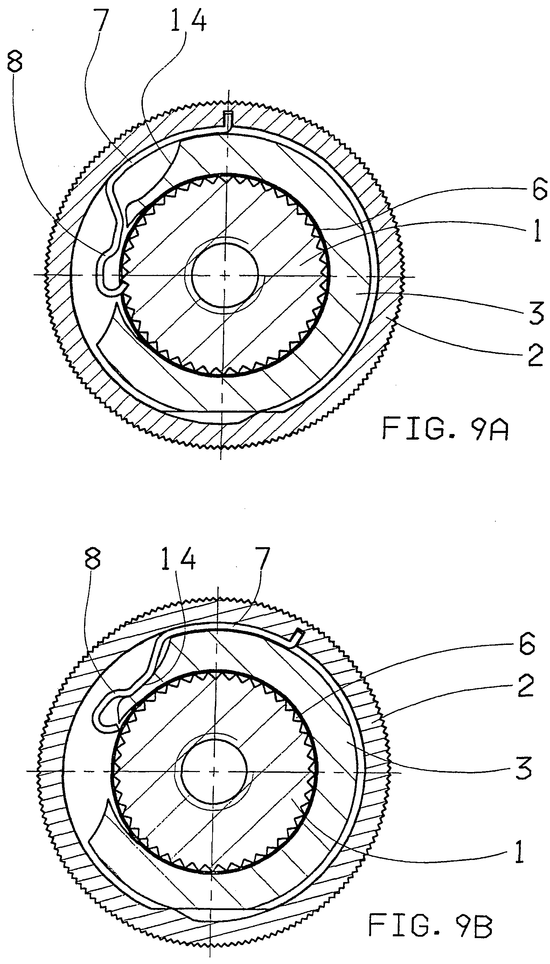

Fig. 8A und 8B zeigen eine Ausführungsform, bei der die Feder 7 am Spannkonus 2 gelagert ist, während die Fig. 9A und 9B eine Ausführungsform zeigen, bei der die Sperrklinke 8 und die Feder 7 einstückig ausgebildet sind und dem Backenhalter 3 die Steuerkurve 14 zugeordnet ist.

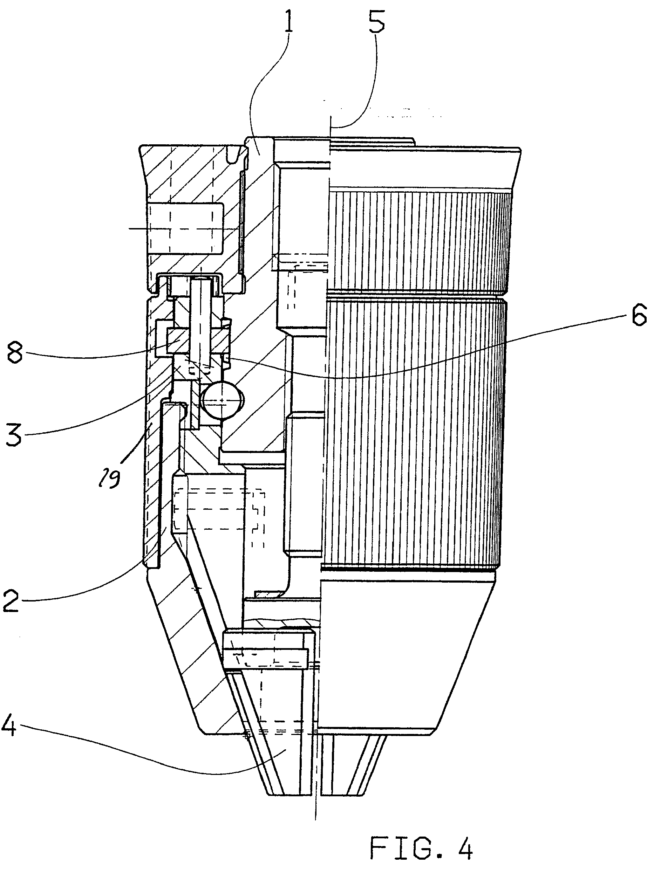

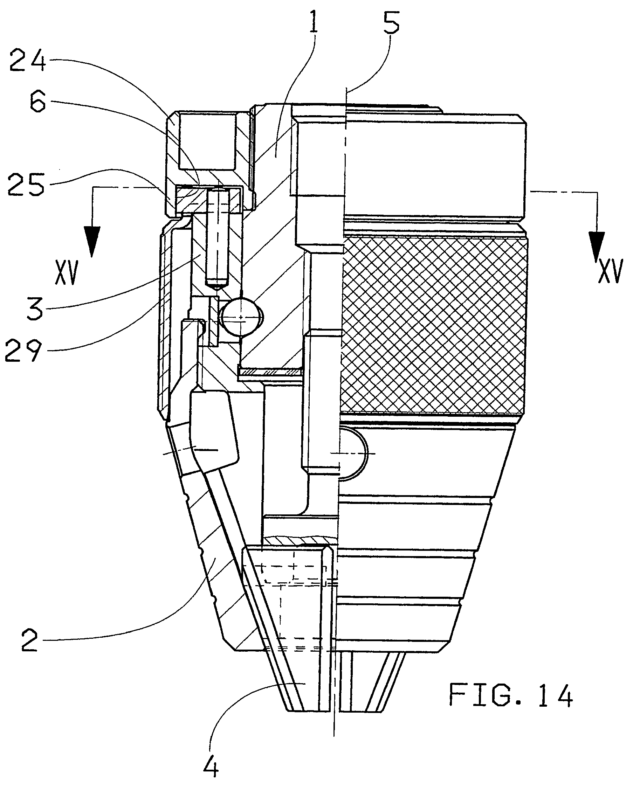

Die Fig. 4, 12 und 14 zeigen Ausführungsformen, bei denen der Spannkonus 2 zweiteilig gestaltet ist mit einem der Verstellung der Sperrklinke 8 dienenden Lösering 29, der kostengünstig aus einem leicht zu verarbeitenden und komplex zu formenden Material, insbesondere einem spritzgußfähigem Material wie Kunststoff gebildet sein kann, aber auch aus Metall zu formen ist.

Diese Alternativen bestehen auch für den Spannkonus 2 als solchen, wobei der Spannkonus 2 und der Lösering 29 in Umfangsrichtung formschlüssig in drehmomentübertragender Weise verbunden sind, beispielsweise indem zwischen dem Lösering und dem Spannkonus 2 eine in Umfangsrichtung wirkende Schlitz-Feder-Verbindung ausgebildet ist.

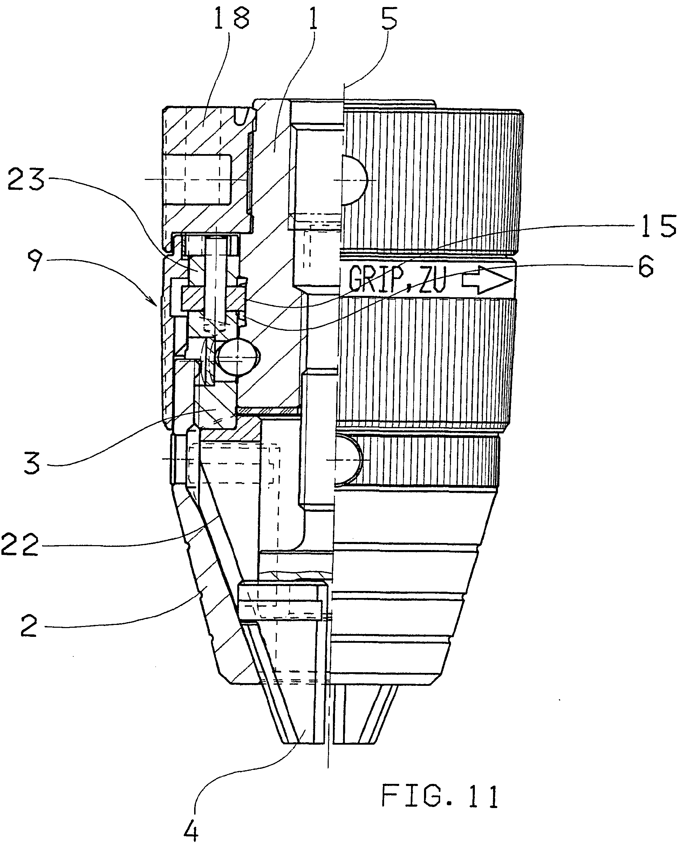

Die Fig. 11 zeigt eine Ausführungsform, bei der der Backenhalter 3 zweiteilig gebildet ist mit einem die Führungsschlitze aufweisenden Halterkonus 22 und einem den Anschlag aufweisenden Anschlagteil 23, wobei die zweiteilige Ausbildung des Backenhalters 3 die gleichen Möglichkeiten eröffnet, wie die zweiteilige Ausbildung des Spannkonus 2, nämlich hinsichtlich der Materialwahl oder -kombination. Auch der Halterkonus 22 und das Anschlagteil 23 sind formschlüssig in drehmomentübertragender Weise verbunden, indem zwischen dem Halterkonus 22 und dem Anschlagteil 23 eine in Umfangsrichtung wirkenden Schlitz-Feder-Verbindung ausgebildet ist.

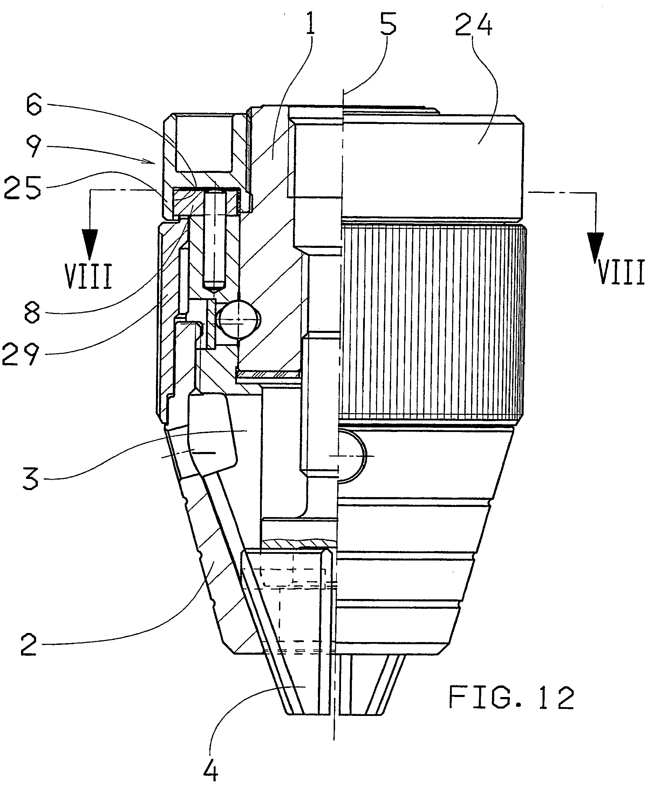

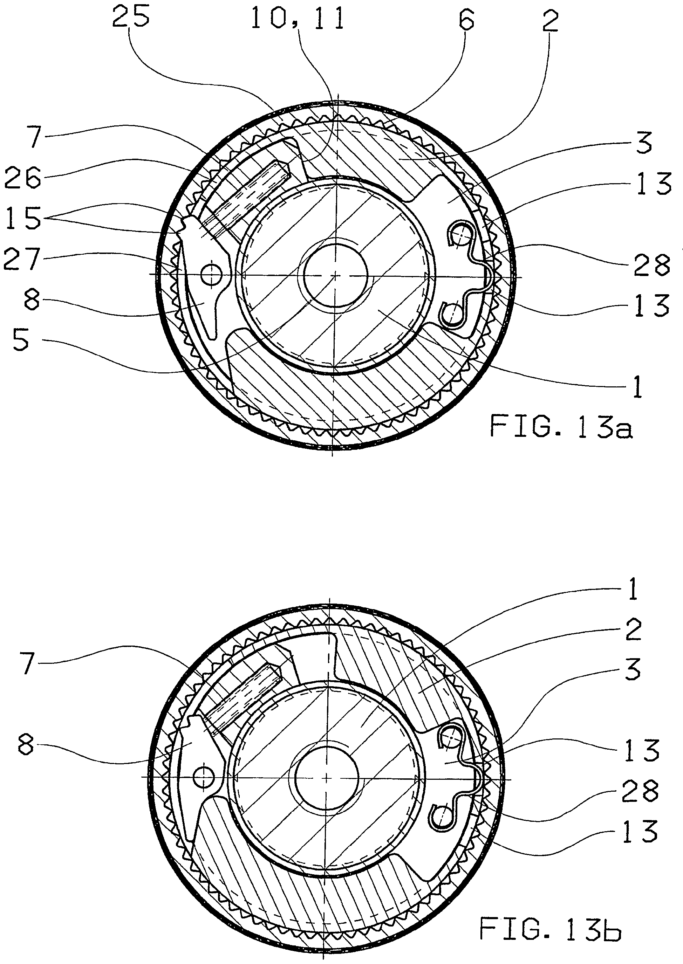

Eine weitere Ausführungsform ist in den Figuren 12 und 13 gezeigt, bei der am axial rückwärtigen, den Spannbacken 4 abgewandten Ende des Futterkörpers 1 drehfest ein Haltering 24 angeordnet ist mit einem axial nach vorne weisenden Ringbund 25, an dem der Zahnkranz 6 an der Innenumfangsfläche ausgebildet ist. Weiterhin ist am axial rückwärtigen Ende des Spannkonus 2 ein Konusbund 26 ausgebildet, der innerhalb des Ringbunds 25 liegt und eine Öffnung 27 zum Durchgriff der Sperrklinke 8 und auch die Rastsitze 13 der Rasteinrichtung 12 aufweist.

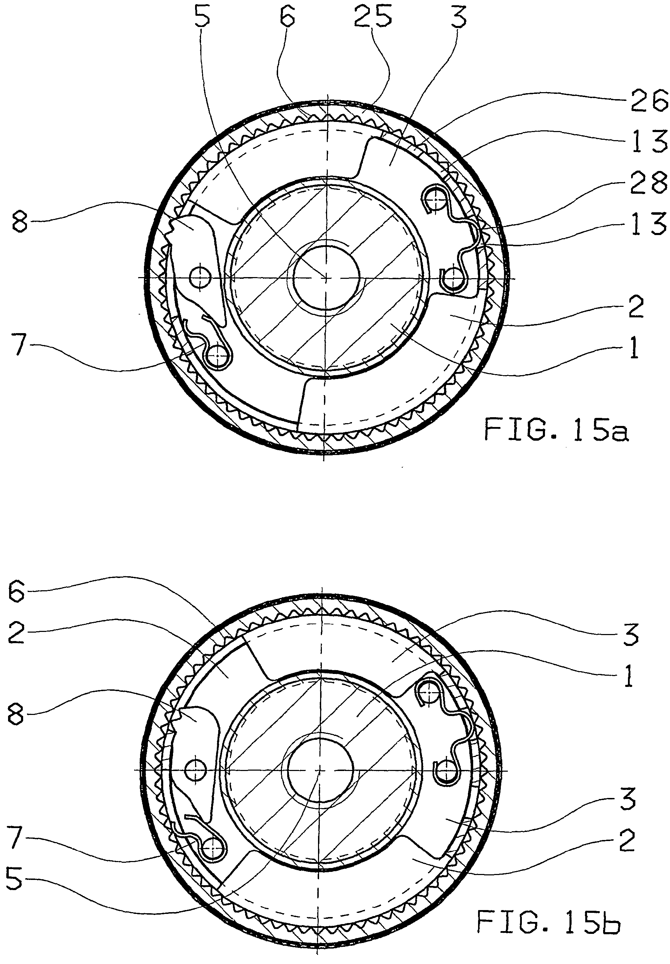

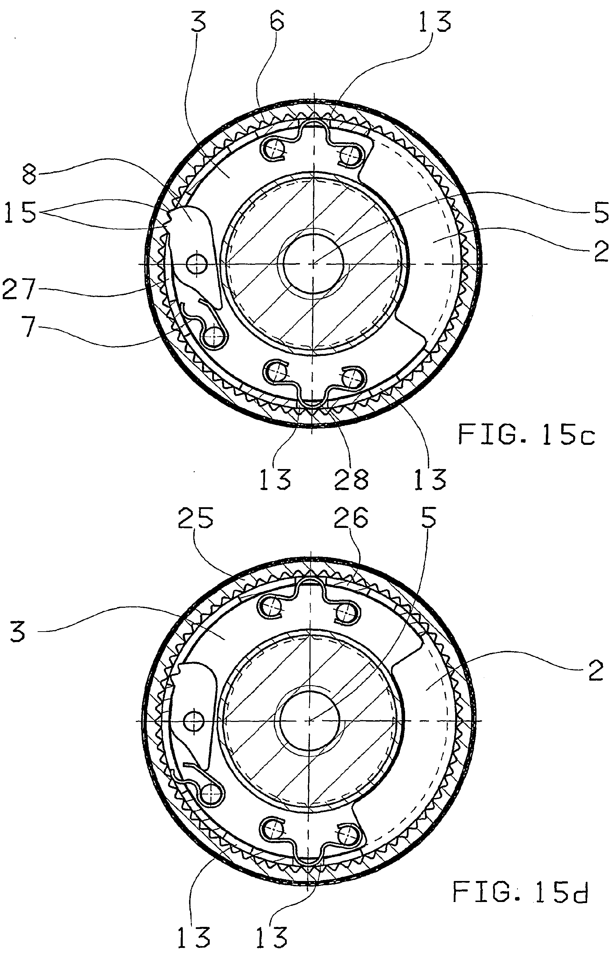

Den in der Zeichnung gezeigte Ausführungsformen ist gemeinsam, dass zum Eingriff in die Rastsitze 13 der Rasteinrichtung 12 eine auf dem Backenhalter 3 angeordnete Rastfeder 28 zugeordnet ist, wobei bei den Ausführungen gemäß den Figuren 6 und 15 die Rastfeder 28 zweifach vorgesehen ist

### Bezugszeichenliste

- 1: Futterkörper
- 2: Spannkonus
- 3: Backenhalter
- 4: Spannbacken
- 5: Futterachse
- 6: Zahnkranz
- 7: Feder
- 8: Sperrklinke
- 9: Verriegelungseinrichtung
- 10: Anschlag
- 11: Gegenanschlag
- 12: Rasteinrichtung
- 13: Rastsitz
- 14: Steuerkurve
- 15: Sperrzähne
- 16: Federkurve
- 17: Kappe
- 18: Griffhülse
- 19: Blattfeder
- 20: Rastnoppen
- 21: Öse
- 22: Halterkonus
- 23: Anschlagteil
- 24: Haltering
- 25: Ringbund
- 26: Konusbund
- 27: Öffnung
- 28: Rostfeder
- 29: Lösering

## Patentansprüche

1. Nachspannendes Bohrfutter mit einem Futterkörper (1), einem koaxial zum Futterkörper (1) verdrehbaren Spannkonus, axial abgestützt auf einem am Futterkörper (1) gelagerten Backenhalter (3), in dem in Führungsschlitzen Spannbacken (4) geführt sind, die zum Spannen und Lösen durch eine Relativdrehung zwischen dem Futterkörper (1) und dem Spannkonus (2) mit dem Backenhalter (3) verstellbar sind, und mit einer, einen zur Futterachse (5) koaxialen Zahnkranz (6) einerseits und einer unter der Kraft einer Feder (7) in den Zahnkranz (6) eingreifenden, am Backenhalter (3) gelagerten Sperrklinke (8) andererseits aufweisenden Verriegelungseinrichtung (9), die den Futterkörper (1) und die Sperrklinke (8) bei in den Zahnkranz (6) eingerückter Sperrklinke (8) gegen Relativdrehung im Sinne eines Lösens der Spannbacken (4) sperrt, Relativdrehungen im Sinne eines Spannens aber unbehindert lässt, wobei die Sperrklinke (8) als ein zweiarmiger Hebel mit mindestens einem einen Sperrzahn (15) aufweisenden ersten Hebelarm und mit einem zur Anlage an einer Steuerkurve (14) bestimmten zweiten Hebelarm gebildet ist, **dadurch gekennzeichnet, dass** an dem Backenhalter (3) ein Anschlag und an dem Spannkonus (2) ein Gegenanschlag (11) zur definierten Begrenzung einer relativen Verdrehbarkeit des Spannkonus (2) gegenüber dem Backenhalter (3) zwischen einer ersten, dem eingerückten Zustand der Sperrklinke (8) und einer zweiten, dem ausgerückten Zustand entsprechenden Drehlage ausgebildet ist, dass die Steuerkurve (14) am Spannkonus ausgebildet ist, und dass eine Rasteinrichtung (12) mit einem der ersten Drehlage zugeordneten und einem der zweiten Drehlage zugeordneten Rastsitz (13) zwischen dem Backenhalter (3) und dem Spannkonus (2) angeordnet ist, die zumindest in der dem Spannen entsprechenden Drehrichtung des Spannkonus (2) dessen Verdrehung gegenüber dem Backenhalter (3) erst bei Erreichen einer vorbestimmten Spannkraft freigibtwobei die Steuerkurve (14) derart ausgebildet ist, die Verstellung der Sperrklinke (8) aus der in den Zahnkranz (6) eingerückten Stellung in die ausgerückte Stellung bei Verdrehung des Spannkonus (2) in die Drehrichtung, die dem Lösen der Spannbacken (4) entspricht zu bewirken.

2. Bohrfutter nach Anspruch 1, **dadurch gekennzeichnet, daß** die Feder (7) den ersten, den Sperrzahn (15) aufweisenden Hebelarm beaufschlagt.

3. Bohrfutter nach einem der Ansprüche 1 bis 2, **dadurch gekennzeichnet, daß** die Feder 87) mittels einer Federkurve (16) in der ausgedrückten Stellung der Sperrklinke (8) aus der diese beaufschlagenden Stellung weg geschwenkt ist.

4. Bohrfutter nach einem der Ansprüche 1 bis 3, **dadurch gekennzeichnet, daß** der Spannkonus (2) zweiteilig gestaltet ist und einen der Verstellung der Sperrklinke (8) dienenden Lösering (29) umfasst, wobei der Lösering (29) und ein verminderter Spannkonus in Umfangsrichtung formschlüssig in drehmomentübertragender Weise verbunden sind.

5. Bohrfutter nach einem der Ansprüche 1 bis 4, **dadurch gekennzeichnet, daß** der Zahnkranz (6) am Futterkörper (1) ausgebildet ist.

6. Bohrfutter nach einem der Ansprüche 4 oder 5, **dadurch gekennzeichnet, daß** der Lösering (29) aus einem Metall besteht.

7. Bohrfutter nach einem der Ansprüche 4 oder 5, **dadurch gekennzeichnet daß** der Lösering (29) aus einem spritzgußfähigen Material, vorzugsweise Kunststoff, besteht.

8. Bohrfutter nach Anspruch 4, **dadurch gekennzeichnet, daß** der verminderte Spannkonus aus einem Metall besteht.

9. Bohrfutter nach Anspruch 4, **dadurch gekennzeichnet, daß** der verminderte Spannkonus aus einem spritzgußfähigen Material, vorzugsweise Kunststoff besteht.

10. Bohrfutter nach Anspruch 4, **dadurch gekennzeichnet, daß** zwischen dem Lösering (29) und dem verminderten Spannkonus eine in Umfangsrichtung wirkende Schlitz-Feder-Verbindung ausgebildet ist.

11. Bohrfutter nach einem der Ansprüche 1 bis 10, **dadurch gekennzeichnet, daß** der Backenhalter (3) zweiteilig gebildet ist mit einem die Führungsschlitze aufweisenden Halterkonus (22) und einem den Anschlag aufweisenden Anschlagteil (23).

12. Bohrfutter nach Anspruch 11, **dadurch gekennzeichnet, daß** der Halterkonus (22) und das Anschlagteil (23) formschlüssig in drehmomentübertragender Weise verbunden sind.

13. Bohrfutter nach Anspruch 12, **dadurch gekennzeichnet, daß** zwischen dem Halterkonus (22) und dem Anschlagteil (23) eine in Umfangsrichtung wirkenden Schlitz-Feder-Verbindung ausgebildet ist.

14. Bohrfutter nach einem der Ansprüche 11 bis 13, **dadurch gekennzeichnet, daß** der Halterkonus (22) einem spritzgußfähigem Material, vorzugsweise aus Kunststoff besteht.

15. Bohrfutter nach einem der Ansprüche 1 bis 4, **dadurch gekennzeichnet, dass** am axial rückwärtigen, den Spannbacken (4) abgewandten Ende des Futterkörpers (1) drehfest ein Haltering (24) angeordnet ist mit einem axial nach vorne weisenden Ringbund (25), an dem der Zahnkranz (6) ausgebildet ist.

16. Bohrfutter nach Anspruch 15, **dadurch gekennzeichnet, dass** der Zahnkranz (6) an der Innenumfangsfläche des Ringbunds (25) ausgebildet ist, und dass am axial rückwärtigen Ende des Spannkonus (2) ein Konusbund (26) ausgebildet ist, der innerhalb des Ringbunds (25) liegt und eine Öffnung (27) zum Durchgriff der Sperrklinke (8) aufweist.

17. Bohrfutter nach Anspruch 16, **dadurch gekennzeichnet, dass** der Konusbund (26) die Rastsitze (13) der Rasteinrichtung (12) aufweist.

18. Bohrfutter nach einem der Ansprüche 1 bis 17, **dadurch gekennzeichnet, dass** zum Eingriff in die Rastsitze (13) der Rasteinrichtung (12) eine auf dem Backenhalter (3) angeordnete Rastfeder (28) zugeordnet ist.

19. Bohrfutter nach Anspruch 18, **dadurch gekennzeichnet, dass** die Rastfeder (28) zweifach vorgesehen ist.

## Claims

1. A self-tightening drill chuck with a chuck body (1), a tightening sleeve (2) that can rotate coaxially to the chuck body (1) and is axially braced against a jaw holder (3) mounted on the chuck body (1), holding jaws (4) being guided in guide slots in which jaw holder for tightening and loosening by relative rotation between the chuck body (1) and the tightening sleeve (2) with the jaw holder, and with a locking device (9) having a ring of gear teeth (6) coaxial to the chuck axis (5) on the one hand and having a detent pawl (8) that is mounted on the jaw holder (3) and engages under the force of a spring (7) into the ring of gear teeth (6) on the other hand, which locking device (9) locks the chuck body (1) and the detent pawl (8) against relative rotation in the loosening direction of the holding jaws (4) when the detent pawl (8) is engaged in the ring of gear teeth (6) but does not prevent rotation in the tightening direction, whereby the detent pawl (8) is made as a two-armed lever with at least a first lever arm having a locking tooth (15) and with a second lever arm for contacting the cam (14) **characterized in that** a stop is formed on the jaw holder (3) and a counterstop (11) is formed on the tightening sleeve (2) for a defined limited rotation of the tightening sleeve (2) relative to the jaw holder (3) between a first angular position corresponding to the engaged state of the detent pawl (8) and a second angular position corresponding to the disengaged state, **in that** the cam (14) is formed at the tightening sleeve (2), and **in that** a retaining device (12) with a locking seat (13) associated with the first angular position and with a locking seat (13) associated with the second angular position is provided between the jaw holder (3) and the tightening sleeve (2), which retaining device (12) permits rotation of the tightening sleeve (2) relative to the jaw holder (3) at least in the rotational sense of the tightening sleeve that corresponds to tightening only when a predetermined tightening force has been achieved, whereby the cam (14) being formed with a cam (14) for shifting the detent pawl (8) out of the position engaged in the ring of gear teeth (6) into the disengaged position upon rotation of the tightening sleeve (2) into the rotational sense corresponding to the loosening of the holding jaws (4).

2. The drill chuck according to claim 1, **characterized in that** the spring (7) bears on the first lever arm having the locking tooth (15).

3. The drill chuck according to claim 1 or 2, **characterized in that** the spring (7) is pivoted by a spring cam (16) in the disengaged position of the detent pawl (8) out of the position bearing on it.

4. The drill chuck according to one of claims 1 to 3, **characterized in that** the tightening sleeve (2) is made in two parts with a loosening ring serving to shift the detent pawl (8).

5. The drill chuck according to one of claims 1 to 4, **characterized in that** the ring of gear teeth (6) is formed on the chuck body (1).

6. The drill chuck according to one of claims 4 to 11, **characterized in that** the loosening ring (29) is made of metal.

7. The drill chuck according to one of claims 4 to 5, **characterized in that** the loosening ring (29) is made of a material capable of being injection-molded, preferably plastic.

8. The drill chuck according claim 4, **characterized in that** the reduced tightening sleeve is made of metal.

9. The drill chuck according to claim 4, **characterized in that** the reduced tightening sleeve is made of a material capable of being injection-molded, preferably plastic.

10. The drill chuck according to claim 4, **characterized in that** a groove-key connection acting in the circumferential direction is formed between the loosening ring (29) and the tightening sleeve.

11. The drill chuck according to one of claims to 10, **characterized in that** the jaw holder (3) is constructed in two parts with a holding sleeve (22) having the guide slots and with a stop part (23) having the stop.

12. The drill chuck according to claim 11, **characterized in that** the holding sleeve (22) and the stop part (23) are positively connected in a torque-transferring manner.

13. The drill chuck according to claim 12, **characterized in that** a groove-key connection acting in the circumferential direction is formed between the holding sleeve (22) and the stop part (23).

14. The drill chuck according to one of claims 11 to 13, **characterized in that** the holding sleeve (22) is made of a material capable of being injection-molded, preferably plastic.

15. The drill chuck according to one of claims 1 to 4, **characterized in that** a holding ring (24) is arranged on the axial rear end of the chuck body (1) facing away from the holding jaws (4) in such a manner that it is adapted to rotate with it in unison, which holding ring has a ring collar (25) facing axially forward on which the ring of gear teeth (6) is formed.

16. The drill chuck according to claim 15, **characterized in that** the ring of gear teeth (6) is formed on the inner circumferential surface of the ring collar (25) and that a conical collar (26) is formed on the axial rear end of the tightening sleeve (2), which conical collar is located inside the ring collar (25) and has an opening (27) so that the detent pawl (8) can extend through it.

17. The drill chuck according to claim 16, **characterized in that** the conical collar (26) is formed with the locking seats (13) of the retaining device (12).

18. The drill chuck according to one of claims 1 to 17, **characterized in that** a locking spring (28) arranged on the jaw holder (3) is associated with the retaining device (12) for engaging into the locking seats (13).

19. The drill chuck according to claim 25, **characterized in that** there are two such springs (28).

## Revendications

1. Mandrin porte-foret à resserrage, comprenant un corps de mandrin (1), un cône de serrage qui peut être tourné coaxialement avec le corps de mandrin (1) et qui est en appui axial sur un porte-mors (3), monté sur le corps de mandrin (1), dans lequel sont guidés, dans des fentes de guidage, des mors de serrage (4) qui, en vue du serrage et du desserrage, peuvent être déplacés par une rotation relative entre le corps de mandrin (1) et le cône de serrage (2) avec le porte-mors (3), et comprenant un dispositif de verrouillage (9) qui présente, d'une part, une couronne dentée (6) coaxiale avec l'axe de mandrin (5), et d'autre part, un cliquet d'arrêt (8) monté sur le porte-mors (3) et s'engageant dans la couronne dentée (6) sous l'action de la force d'un ressort (7), et qui, lorsque le cliquet d'arrêt (8) est engagé dans la couronne dentée (6), immobilise le corps de mandrin (1) et le cliquet d'arrêt (8) pour empêcher une rotation relative dans le sens d'un desserrage des mors de serrage (4), tout en autorisant des rotations relatives dans le sens d'un serrage, le cliquet d'arrêt (8) étant réalisé sous la forme d'un levier à deux bras, comportant au moins un premier bras de levier présentant une dent d'arrêt (15), et un deuxième bras de levier destiné à venir en appui contre une came de commande (14), **caractérisé en ce qu'**une butée est réalisée sur le porte-mors (3) et une contre-butée (11) est réalisée sur le cône de serrage (2), en vue de la limitation définie d'une possibilité de rotation relative du cône de serrage (2) par rapport au porte-mors (3), entre une première position angulaire, correspondant à l'état engagé du cliquet d'arrêt (8), et une deuxième position angulaire correspondant à l'état dégagé, **en ce que** la came de commande (14) est réalisée sur le cône de serrage, et **en ce qu'**un dispositif d'encliquetage (12), comportant un moyen d'encliquetage (13), associé à la première position angulaire, et un moyen d'encliquetage (13) associé la deuxième position angulaire, est disposé entre le porte-mors (3) et le cône de serrage (2), lequel dispositif, au moins dans le sens de rotation correspondant au serrage du cône de serrage (2), autorise la rotation de celui-ci par rapport au porte-mors (3) seulement lorsqu'une force de serrage prédéterminée est atteinte, la came de commande (14) étant réalisée de manière à provoquer le déplacement du cliquet d'arrêt (8) à partir de la position engagée dans la couronne dentée (6), vers la position dégagée, lors de la rotation du cône de serrage (2) dans le sens de rotation qui correspond au desserrage des mors de serrage (4).

2. Mandrin porte-foret selon la revendication 1, **caractérisé en ce que** le ressort (7) sollicite le premier bras de levier qui présente la dent d'arrêt (15).

3. Mandrin porte-foret selon l'une des revendications 1 à 2, **caractérisé en ce que** dans la position dégagée du cliquet d'arrêt (8), le ressort 87) est éloigné par pivotement de la position de sollicitation de celui-ci, au moyen d'une came de ressort (16).

4. Mandrin porte-foret selon l'une des revendications 1 à 3, **caractérisé en ce que** le cône de serrage (2) est réalisé en deux parties et comprend une bague de libération (29) servant à déplacer le cliquet d'arrêt (8), la bague de libération (29) et un cône de serrage diminué étant reliés mécaniquement dans la direction circonférentielle, de manière à transmettre le couple.

5. Mandrin porte-foret selon l'une des revendications 1 à 4, **caractérisé en ce que** la couronne dentée (6) est réalisée sur le corps de mandrin (1).

6. Mandrin porte-foret selon l'une des revendications 4 ou 5, **caractérisé en ce que** la bague de libération (29) se compose d'un métal.

7. Mandrin porte-foret selon l'une des revendications 4 ou 5, **caractérisé en ce que** la bague de libération (29) se compose d'un matériau pouvant être moulé par injection, de préférence de matière plastique.

8. Mandrin porte-foret selon la revendication 4, **caractérisé en ce que** le cône de serrage diminué se compose d'un métal.

9. Mandrin porte-foret selon la revendication 4, **caractérisé en ce que** le cône de serrage diminué se compose d'un matériau pouvant être moulé par injection, de préférence de matière plastique.

10. Mandrin porte-foret selon la revendication 4, **caractérisé en ce qu'**il est prévu, entre la bague de libération (29) et le cône de serrage diminué, une liaison rainure-languette agissant dans la direction circonférentielle.

11. Mandrin porte-foret selon l'une des revendications 1 à 10, **caractérisé en ce que** le porte-mors (3) est réalisé en deux parties, avec un cône de support (22), présentant les fentes de guidage, et un élément de butée (23) présentant la butée.

12. Mandrin porte-foret selon la revendication il, **caractérisé en ce que** le cône de support (22) et l'élément de butée (23) sont reliés mécaniquement de manière à transmettre le couple.

13. Mandrin porte-foret selon la revendication 12, **caractérisé en ce qu'**il est prévu, entre le cône de support (22) et l'élément de butée (23), une liaison rainure-languette agissant dans la direction circonférentielle.

14. Mandrin porte-foret selon l'une des revendications 11 à 13, **caractérisé en ce que** le cône de support (22) se compose d'un matériau pouvant être moulé par injection, de préférence de matière plastique.

15. Mandrin porte-foret selon l'une des revendications 1 à 4, **caractérisé en ce que**, à l'extrémité axialement arrière du corps de mandrin (1), opposée aux mors de serrage (4), il est prévu une bague de support (24) immobile en rotation, comprenant un collet annulaire (25) qui est orienté axialement vers l'avant et sur lequel est réalisée la couronne dentée (6).

16. Mandrin porte-foret selon la revendication 15, **caractérisé en ce que** la couronne dentée (6) est réalisée sur la surface périphérique intérieure du collet annulaire (25), et **en ce qu'**il est prévu, à l'extrémité axialement arrière du cône de serrage (2), un collet conique (26) qui se situe à l'intérieur du collet annulaire (25) et présente une ouverture (27) destinée au passage du cliquet d'arrêt (8).

17. Mandrin porte-foret selon la revendication 16, **caractérisé en ce que** le collet conique (26) présente les moyens d'encliquetage (13) du dispositif d'encliquetage (12).

18. Mandrin porte-foret selon l'une des revendications 1 à 17, **caractérisé en ce que** pour l'engagement dans les moyens d'encliquetage (13) du dispositif d'encliquetage (12), on a associé un ressort d'encliquetage (28) qui est disposé sur le porte-mors (3).

19. Mandrin porte-foret selon la revendication 18, **caractérisé en ce que** le ressort d'encliquetage (28) est prévu en double.
